# EUROPEAN PATENT APPLICATION

(11) **EP 4 681 883 A1**
(43) Date of publication of application: **21.01.2026**
(21) Application number: 24382791.2
(22) Date of filing: 19.07.2024
(51) Int. Cl.: B25B 31/00, B25J 15/00

(54) **DEVICE FOR CLAMPING AND UNCLAMPING TEMPORARY FASTENERS**

(71) Applicant: AIRBUS OPERATIONS, S.L.U., 28906 Getafe (Madrid) (ES)
(72) Inventor: CEBOLLA GARROFE, Pablo, 28906 GETAFE (Madrid) (ES)
(74) Representative: Herrero & Asociados, S.L.

(57) **Abstract**

The present invention relates to a device for clamping and unclamping temporary fasteners. This device, stored in an automatic tool changer and introduced automatically in an end effector, clamps and unclamps temporary fasteners without manual intervention. It applies torque to the fastener's screw via an inner drive, typically using a hexagonal head actuated by an electrical screwdriver. Existing devices require additional actuation and a specific end effector with an anti-rotation element, increasing costs and complexity. This invention aims to eliminate the need for extra end effectors or complicated actuations, using a drilling end effector for both drilling and clamping. The device comprises a support (1) for the fastener (2), a holder (6) for the rotating tool that rotates with the support (1) to clamp or unclamp the fastener (2), and an outer body (3) with an anti-rotation profile (4) between the support (1) and the holder (6).

## Description

The present invention relates to a device for clamping and unclamping temporary fasteners.

### Background of the invention

A device for temporary fasteners is a passive tool that can be stored in an automatic tool changer and introduced automatically in an end effector to perform the task of clamping and unclamping the temporary fasteners without any manual intervention.

In a device for clamping and unclamping temporary fasteners an inner drive applies torque to a screw of the temporary fastener through rotation. It normally has a hexagonal head to be actuated by an electrical screwdriver. Drilling end effectors have a robust exchangeable tool holder to allow big torques and high-speed rotation in an accurate way.

A part of the device, such as a hexagonal head or a cylinder with flat faces is typically held or fixed to the end effector, to provide an anti-rotation effect for the temporary fastener. If the inner drive mechanism is connected to the torque source and rotates, there is the need for an external mechanism to be supplying anti-rotation to the outer portion of the end effector which holds the body.

Therefore, actual devices for clamping and unclamping temporary fasteners need extra actuation on the tool to clamp and unclamp the temporary fasteners in position and need an anti-rotation element that forces it to have specific end effector for this purpose, which increases the costs and complexity of the device.

### Description of the invention

Therefore, an objective of the present invention is to provide a device for clamping and unclamping temporary fasteners in which no extra end effector is needed or complicated actuation, reducing the costs and complexity and allowing the use of a drilling end effector for drilling and for clamping and unclamping temporary fasteners.

The device for clamping and unclamping temporary fasteners of the invention solves the above-mentioned disadvantages and has other advantages which will be described below.

The device for clamping and unclamping temporary fasteners according to the present invention is described in claim 1, and the dependent claims include additional features that are optional.

In particular, the device for clamping and unclamping temporary fasteners comprises:
- a support for a temporary fastener;
- a holder for a rotating tool, said holder rotating with the support, so that a rotation in a direction clamps the temporary fastener, and a rotation in an opposite direction unclamps the temporary fastener; and
- an outer body provided with an anti-rotation profile, placed between the support and the holder.

Advantageously, said anti-rotation profile comprises a plurality of protrusions or flat faces placed around the outer body, and preferably the outer body is cylindrical.

Furthermore, the device for clamping and unclamping temporary fasteners according to the present invention also comprises an adapter placed between the holder and the outer body.

According to a preferred embodiment, the outer body comprises an inner body inside it, that is movable against the bias of a spring.

Furthermore, the holder preferably comprises an internal engaging interface for engaging a rotating tool.

With the device for clamping and unclamping temporary fasteners according to the present invention, it is avoided any extra system needed to actuate a temporary fastener tool and transform the tool into a passive system able to be operated by any spindle use for drilling needing only the normal rotation of the spindle and the advance and retraction motion of it.

Therefore, no extra end effector is needed or complicated actuation, reducing the costs and complexity of the device and allowing the use of a drilling end effector for clamping and unclamping temporary fasteners.

### Brief description of the drawings

For a better understanding of what has been explained above, some drawings are included in which, schematically and only by way of a non-limiting example, a practical case of embodiment is represented.
Figure 1 is a perspective view of the device for clamping and unclamping temporary fasteners according to the present invention;
Figure 2 is a side view of the device for clamping and unclamping temporary fasteners according to the present invention; and
Figure 3 is a longitudinal-section side view of the device for clamping and unclamping temporary fasteners according to the present invention.

### Description of a preferred embodiment

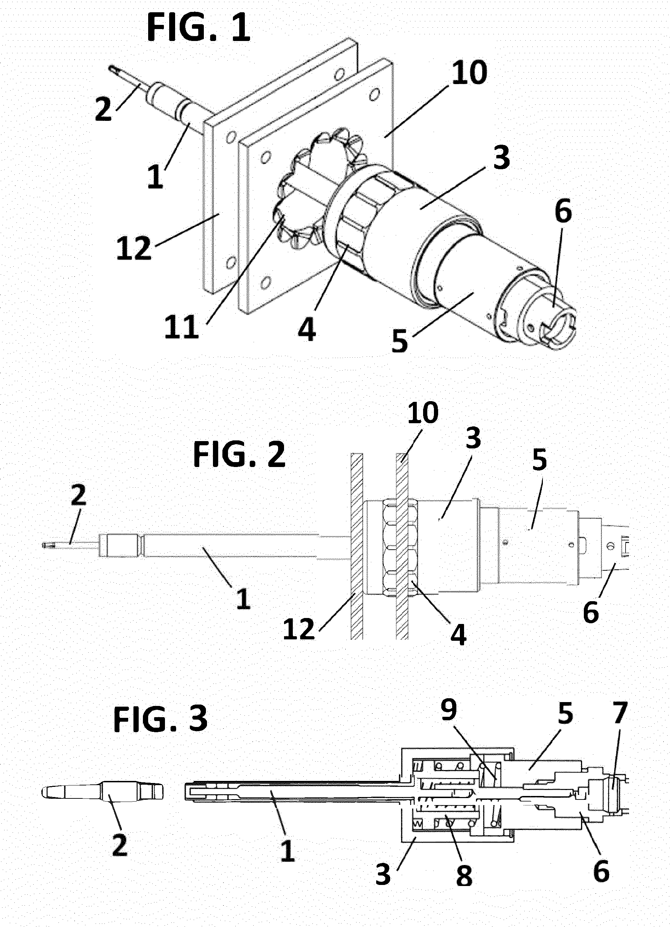

Figures 1-3 show the device for clamping and unclamping temporary fasteners according to the present invention.

The device according to the present invention comprises a support (1) for supporting a temporary fastener (2), said support having an elongated shape.

Next to the support (1) the device comprises an outer body (3) comprising an external anti-rotation profile (4), said anti-rotation profile (4) including a plurality of protrusions or flat faces, i.e., a profile that is not circular.

The outer body (3) is preferably cylindrical, and the anti-rotation profile (4) extends around the whole periphery of the outer body (3), as shown in figures 1 and 2.

Next to the outer body (3), the device comprises an adapter (5) and at an end of this adapter (5), a holder (6) for a rotatable tool, such as e.g. a drilling tool, not shown in the drawings.

The holder (6) and the support (1) are linked to each other, being rotatably integral to each other, i.e., the support (1) rotates in the same direction that the holder (6).

This way, when the holder (6) is rotated in one direction, the temporary fastener (2), fixed to the support (1), is clamped, and when the holder (6) rotates in the opposite direction, the temporary fastener (2) is unclamped.

In figure 3 the internal components of the device according to the present invention are shown, wherein the holder (6) comprises an engaging interface (7) for engaging the rotating tool. This engaging interface (7) is complementary with the adapter (5), so that a predetermined type of rotating tool can be inserted, e.g. a HSK32 profile, even tough it can be any suitable interface.

Furthermore, inside the outer body (3) an inner body (8) is placed, that is longitudinally movable inside said outer body (3) for the different operation modes.

In operation, and for permitting the anti-rotation function, the anti-rotation profile 4 is housed inside a complementary hole (11) of an end effector frame plate (10), shown in figures 1 and 2, and the support (1) crosses an end effector frame (12).

## Claims

1. Device for clamping and unclamping temporary fasteners, comprising:
- a support (1) for a temporary fastener (2);
- a holder (6) for a rotating tool, said holder (6) rotating with the support (1), so that a rotation in a direction clamps the temporary fastener (2), and a rotation in an opposite direction unclamps the temporary fastener (2);
**characterized in that** the device also comprises:
- an outer body (3) provided with an anti-rotation profile (4), placed between the support (1) and the holder (6).

2. Device for clamping and unclamping temporary fasteners according to claim 1, wherein said anti-rotation profile (4) comprises a plurality of protrusions or flat faces placed around the outer body (3).

3. Device for clamping and unclamping temporary fasteners according to claim 1 or 2, wherein the outer body (3) is cylindrical.

4. Device for clamping and unclamping temporary fasteners according to any one of the previous claims, wherein the device also comprises an adapter (5) placed between the holder (6) and the outer body (3).

5. Device for clamping and unclamping temporary fasteners according to any one of the previous claims, wherein the outer body (3) comprises an inner body (8) placed inside it, that is movable against the bias of a spring (9).

6. Device for clamping and unclamping temporary fasteners according to any one of the previous claims, wherein the holder (6) comprises an internal engaging interface (7) for engaging a rotating tool.
